# EUROPÄISCHE PATENTSCHRIFT

(11) **EP 1 255 666 B1**
(45) Veröffentlichungstag und Bekanntmachung des Hinweises auf die Patenterteilung: **22.04.2009**
(21) Anmeldenummer: 01905690.2
(22) Anmeldetag: 25.01.2001
(51) Int. Cl.: B60T 8/40, B60T 13/14, B60T 17/02, F04C 15/00, B60T 8/36

(54) **BREMSANLAGE**
BRAKE UNIT
INSTALLATION DE FREINAGE

(30) Priorität: 02.02.2000 DE 10004518
(43) Veröffentlichungstag der Anmeldung: 13.11.2002
(73) Patentinhaber: Continental Teves AG & Co. oHG, 60488 Frankfurt (DE)
(72) Erfinder: RÜFFER, Manfred, 65843 Sulzbach (DE); NEUMANN, Ulrich, 64380 Rossdorf (DE); KLEIN, Andreas, 61352 Bad Homburg (DE); JUNGBECKER, Johann, 55576 Badenheim (DE); ALBRICH VON ALBRICHSFELD, Christian, 64283 Darmstadt (DE); RUPPERT, Norbert, 64807 Dieburg (DE)
(74) Vertreter: Neumann, Stephan
(86) Internationale Anmeldenummer: PCT/EP2001/000832
(87) Internationale Veröffentlichungsnummer: WO 2001/056850

(56) Entgegenhaltungen:
- DE-A- 4 107 625
- DE-A- 4 120 665
- DE-A- 19 543 962
- DE-A- 19 724 166
- DE-A- 19 732 747
- DE-A- 19 836 494
- DE-A- 19 847 082
- DE-A- 19 918 390
- DE-A- 19 928 164
- DE-A- 19 936 711

## Beschreibung

Die vorliegende Erfindung betrifft eine elektronisch regelbare Bremsanlage für Kraftfahrzeuge mit einer Druckerzeugungseinrichtung zum Erzeugen eines hydraulischen Druckes und einer Antriebseinrichtung hierfür. Eine als Stufenkolbenpumpe ausgebildete Pumpe ist beispielsweise aus der deutschen Offenlegungsschrift DE 43 16 986 A1 bekannt.

Kolbenpumpen besitzen bei dieser Anwendung den Nachteil einer funktionsbedingten Druckpulsation, welche insbesondere von der Anzahl der verwendeten Kolben abhängt. Dadurch wird ein gewisser Geräuschpegel verursacht, welcher sich im Fahrgastraum als inakzeptabel darstellen kann. Besonders bei der Anwendung einer Kolbenpumpe in EHB-Systemen (elektrohydraulische Bremsanlage) kann dieser Umstand zu einer Komfortverschlechterung führen.

Ferner sind im Stand der Technik sogenannte Innenzahnradpumpen bekannt. Als Beispiel hierfür wird auf die europäische Patentanmeldung EP-A-0 848 165 A2 verwiesen. Aus dieser Druckschrift ist eine füllstücklose Innenzahnradmaschine mit einem Gehäuse, einem in einer Bohrung des Gehäuses quer zu seiner Achse bewegbar jedoch undrehbar aufgenommenen Lagerings, einem in dem Lagering umlaufend gelagerten verzahnten Hohlrad und einem in dem Gehäuse drehbar gelagerten Ritzel, bekannt. Weiterhin ist aus der DE 199 18 390 A1 ein System bekannt, welches eine Antriebswelle und eine Pumpenwelle aufweist, und wobei die Antriebswelle in einem Lagerschild vom Antriebsmotor gelagert ist. Die Pumpe ist als eigenständig handhabbare Patrone ausgebildet.

Die Aufgabe der vorliegenden Erfindung besteht darin, die Nachteile des Standes der Technik zu vermeiden, und eine elektronisch geregelte Bremsanlage der eingangs genannten Art derart weiterzubilden, daß lediglich ein geringerer Geräuschpegel während der Druckerzeugungsphasen, insbesondere bei EHB-Systemen, auftritt. Ein weiteres Ziel betrifft eine preisgünstigere Ausführung der Motorlagerung.

Die erfindungsgemäße Aufgabe wird bei einer Bremsanlage der eingangs genannten Art durch die im kennzeichnenden Teil des Patentanspruchs 1 angegebenen Merkmale gelöst.

Ein Vorteil der vorliegenden Erfindung besteht darin, daß bei einer Innenzahnradpumpe lediglich Momente übertragen werden, d. h. daß auf das Motorlager geringere Radialkräfte als bei einer Radialkolbenpumpe wirken. Dies ermöglicht einen pulsationsarmen Betrieb. Eine Welle der Antriebseinrichtung ist in einem Lager geführt, wobei das Lager in einem Ventilblock einer hydraulischen Regeleinheit angeordnet ist. Somit wird kein massiver Motorflansche zur Aufnahme der Lagerkräfte benötigt, da diese vom Ventilblock aufgenommen werden. Das Lagerschild kann in diesem Fall als einfaches Kunststoffspritzteil ausgebildet sein.

Zur Vereinfachung der Montage der Bremsanlage ist die Innenzahnradpumpe eine eigenständig handhabbare Baueinheit. Dadurch kann die Pumpe auch extern vorgeprüft werden.

Die Innenzahnradpumpe ist als Patrone ausgebildet. Hierdurch ergibt sich eine einfache Integration der Pumpe in eine HCU einer elektronisch geregelten Bremsanlage.

Zum Erreichen einer besonders stabilen Verbindung, welche insbesondere auch Manipulationen an der Bremsanlage verhindert, ist ist die Innenzahnradpumpe in einem Ventilblock einer hydraulischen Regeleinheit durch wenigstens eine Clinch- oder Verstemmverbindung befestigt.

Vorzugsweise ist ein druckseitiger Anschluß der Druckerzeugungseinrichtung mit einer als Patrone ausgebildeten Ventilanordnung verbunden, wobei die Ventilanordnung ein Rückschlagventil und ein Druckbegrenzungsventil aufweist. Auf diese Weise ergibt sich ebenfalls eine externe Vorprüfbarkeit der Ventilanordung und eine einfachere Montage.

Zum Erreichen einer besonders stabilen Verbindung, welche insbesondere auch Manipulationen an der Bremsanlage verhindert, ist die Ventilanordnung in einem Ventilblock einer hydraulischen Regeleinheit durch eine Clinch- oder Verstemmverbindung befestigt.

Eine besonders kompakte Bauform der Pumpe ergibt sich, wenn die Pumpe ein Gehäuseteil und ein Deckelteil aufweist, wobei der Gehäuseteil und der Deckelteil mittels einer Lancierverbindung miteinander verbunden sind. Durch die Lancierverbindung wird ebenfalls eine Verschmutzung des Systems durch Späne vermieden.

Vorteilhafterweise ist im Pumpenansaugbereich der Druckerzeugungseinrichtung ein Niederdruckraum ausgebildet. Auf diese Weise können insbesondere bei einer OHB-Anwendung die an die Wellendichtungen der Motorwelle gestellten Anforderungen, nämlich Hochdruckfestigkeit einer Wellendichtung, verringert werden. Bevorzugt ist der Niederdruckraum mit einem Niederdruckspeicher oder dergleichen verbunden.

Zur Vermeidung eines übermäßigen Kupplungsverschleißes ist eine zur Verbindung der Antriebseinrichtung und der Druckerzeugungseinrichtung vorgesehene Kupplungseinrichtung im Niederdruckraum angeordnet.

Die Erfindung, sowie weitere Merkmale, Ziele, Vorteile und Ausgestaltungen derselben wird bzw. werden nachfolgend anhand der beigefügten Zeichnungen näher erläutert. Überall in den Zeichnungen bezeichnen dieselben Bezugszeichen dieselben oder entsprechende Elemente. In den Zeichnungen zeigen:
- Fig. 1: eine schematische, teilweise weggebrochene, auseinandergezogenene Querschnittsansicht eines Motor-Pumpen-Aggregats gemäß einem ersten Beispiel, lediglich zur technischen Erläuterung;
- Fig. 2a: eine schematische Querschnittsansicht der Innenzahnradpumpe gemäß Fig. 1;
- Fig. 2b: eine schematische Schnittansicht des Hohlrads und Ritzels entlang der Linie IIb-IIb der Fig. 2a;
- Fig. 3: eine schematische Querschnittsansicht der Ventilpatrone gemäß Fig. 1;
- Fig. 4: eine schematische, teilweise weggebrochene Querschnittsansicht des Motor-Pumpen-Aggregats gemäß Fig. 1 im zusammengebauten Zustand;
- Fig. 5: ein schematisches Blockschaltbild des MotorPumpen-Aggregats gemäß dem in den Fig. 1 bis 4 dargestellten Aggregat;
- Fig. 6: eine schematische Teilquerschnittsansicht eines Motor-Pumpen-Aggregats gemäß einem zweiten Beispiel zur Erläuterung;
- Fig. 7: eine schematische Teilquerschnittsansicht eines Motor-Pumpen-Aggregats gemäß einem Beispiel der vorliegenden Erfindung;
- Fig. 8: eine schematische Teilquerschnittsansicht eines Motor-Pumpen-Aggregats gemäß eines zweiten Ausführungsbeispiels der vorliegenden Erfindung;
- Fig. 9: eine schematischen Teilquerschnittsansicht eines Motor-Pumpen-Aggregats gemäß einem Beispiel zur Erläuterung; und
- Fig. 10: eine schematische Teilquerschnittsansicht eines Motor-Pumpen-Aggregats gemäß einem weiteren Beispiel zur Erläuterung.

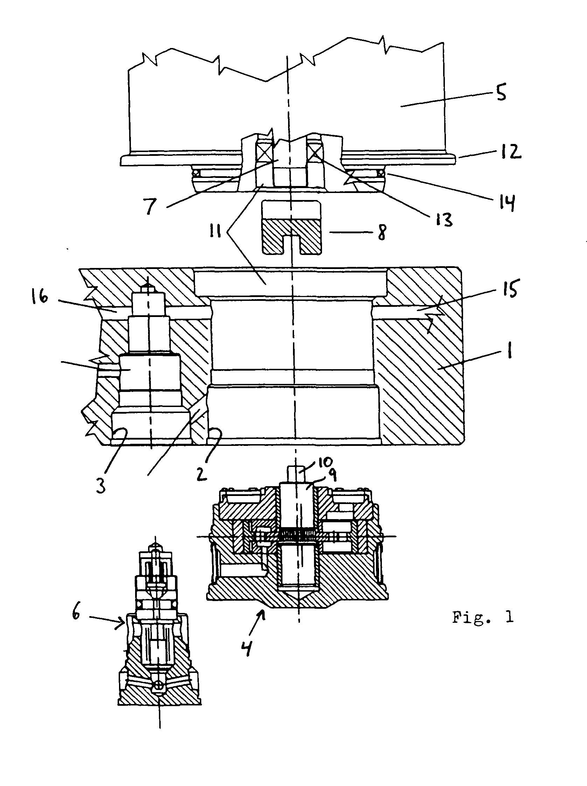

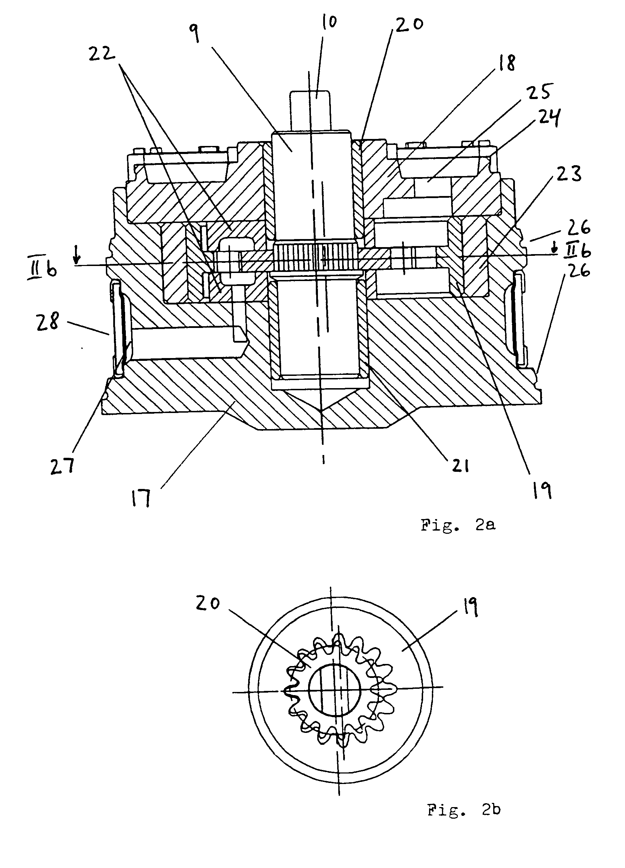

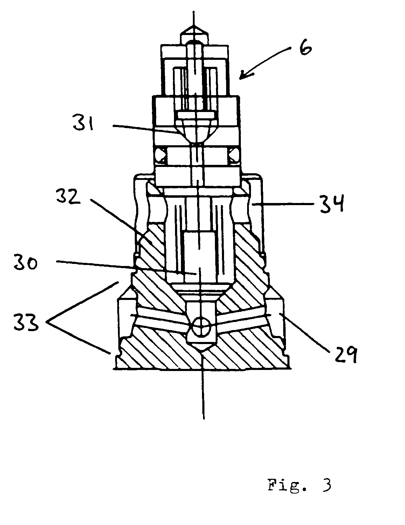

In Verbindung mit den Figuren 1 bis 5 wird im folgenden ein Beispielhaftes Motor-Pumpen-Aggregat näher erläutert. In Fig. 1 ist schematisch das Motor-Pumpen-Aggregat in einer auseinandergezogenen, teilweisen Querschnittsdarstellung schematisch gezeigt. Mit einem Bezugszeichen 1 wird ein Ventilblock oder HCU-Block einer hydraulischen Steuereinheit einer elektronisch geregelten Bremsanlage bezeichnet. In dem Ventilblock 1 sind zwei im wesentlichen parallel angeordnete Ausnehmungen 2 und 3 ausgebildet. Die Ausnehmung 2 dient dabei der Aufnahme einer Innenzahnradpumpe 4, welche im folgenden in Verbindung mit den Figuren 2a und 2b hinsichtlich des Aufbaus näher erläutert wird. Während die Innenzahnradpumpe 4 in einen unteren Abschnitt der Ausnehmung 2 bündig eingesetzt wird, ist in dem gegenüberliegenden oberen Abschnitt der Ausnehmung 2 ein Motor 5 befestigt. Die Ausnehmung 3 dient zur Aufnahme einer als Patrone oder Cartrige ausgebildeten Ventilanordnung 6. Ventilanordnung 6 wird im folgenden unter Bezugnahme auf die Fig. 3 in weiterer Einzelheit erläutert. Die Motorwelle 7 ist über eine Kupplung 8 querkraftfrei mit einem am oberen Ende der Ritzelwelle 9 ausgebildeten Zapfen 10 gekuppelt. Die Motorwelle 7 läuft in dem Saugraum 11 naß und ist an einem Lagerschild 12 des Motors 5 mittels einer Manschette 13 abgedichtet. Zur Außenabdichtung des Saugraums 11 ist eine im Lagerschild 12 integrierte O-Ring-Dichtung 14 vorgesehen. Ferner weist der Ventilblock 1 einen Nachlaufanschluß 15 des Ausgleichsbehälters auf. Gegenüberliegend ist in dem Ventilblock 1 ein Rücklaufanschluß 16 für Regelventile ausgebildet. Die Anschlüsse 15, 16 sind mit dem Saugraum 11 verbunden.

In Fig. 2a ist schematisch eine Querschnittsansicht der eingesetzten Innenzahnradpumpe 4 gezeigt. Die Innenzahnradpumpe 4 weist ein Pumpengehäuse 17, einen Pumpendeckel 18 und ein Hohlrad 19 auf. In dem Hohlrad 19 läuft ein ein- oder mehrteiliges Ritzel 20 (vergleiche Fig. 2b) zur Druckerzeugung rotatorisch in Gleithülsen 21 und Radialscheiben 22. Dabei wird das Hohlrad 19 durch eine Gleitring 23 im Pumpengehäuse 17 radial abgestützt. Der Pumpendeckel 18 ist mit einem integrierten Saugfilter 24 versehen und bildet somit einen Sauganschluß 25 der Innenzahnradpumpe 4. Der Pumpendeckel 18 wird nach einer Vormontage der Innenteile mit dem Pumpengehäuse 17 verstemmt. Das Pumpengehäuse 17 der Innenzahnradpumpe 4 ist im wesentlichen einteilig ausgebildet und weist an seinem Umfang Clinchkonturen 26 auf. Ferner nimmt das Pumpengehäuse 17 einen ringförmigen Druckanschluß 27 und einen Druckfilter 28 in sich auf. Im Hinblick auf weitere Einzelheiten des Aufbaus und des Betriebs der verwendeten Innenzahnradpumpe 4 sei hiermit nochmals ausdrücklich auf die Beschreibungseinleitung genannte Veröffentlichung der europäischen Patentanmeldung EP-A-0 848 165 A2 Bezug genommen.

In Fig. 2b ist eine schematische Draufsicht auf einen Schnitt entlang der Linie IIb-IIb der Fig. 2a gezeigt. In Verbindung mit Fig. 3 wird im folgenden der Aufbau der als Patrone ausgebildeten Ventilanordnung 6 in weiterer Einzelheit erläutert. Ein Druckanschluß 29 der Ventilpatrone 6 ist in bestimmungsgemäßer Einbaulage mit dem ringförmigen Druckanschluß 27 der Innenzahnradpumpe 4 verbunden. Die Ventilpatrone 6 weist ein Rückschlagventil 30 und ein Druckbegrenzungsventil 31 auf. Das Gehäuse 32 der Ventilpatrone 6 ist einteilig ausgebildet. Am Außenumfang des Gehäuses 32 sind ebenfalls wie am Außenumfang des Pumpengehäuses 17, Clinchkonturen 33 ausgebildet, um die Ventilpatrone im Ventilblock 1 zu befestigen. Ein Ringkanal 34 des Rückschlagventils 30 versorgt die Regelventile bzw. den Speicher mit dem nötigen Versorgungsdruck. Bei Überschreiten eines zulässigen Systemdruckes öffnet das Druckbegrenzungsventil 31 und verbindet den Ringkanal 34 mit dem Sauganschlußraum 11 der Innenzahnradpumpe 4. Es sei bemerkt, daß auch die Ventilpatrone 6 eine eigenständig handhabbare Baueinheit ist, die insbesondere auch extern vorgeprüft werden kann.

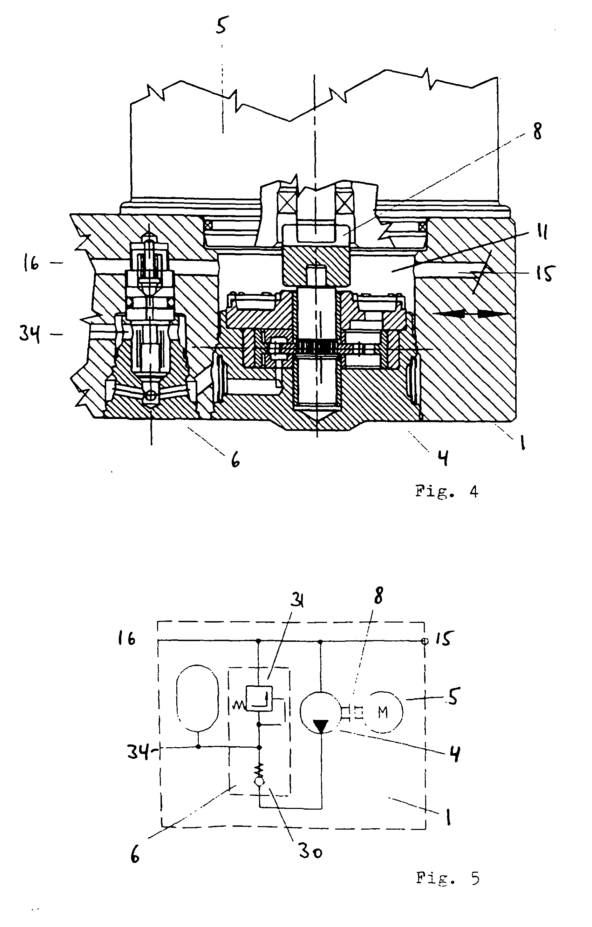

Zur weiteren Verdeutlichung ist in Fig. 4 das Motor-Pumpen-Aggregat mit in den Ventilblock 1 eingebauten Zustand gezeigt. Fig. 5 zeigt ein schematisches hydraulisches Blockschaltbild des Motor-Pumpen-Aggregats, sowie der Ventilanordnung 6.

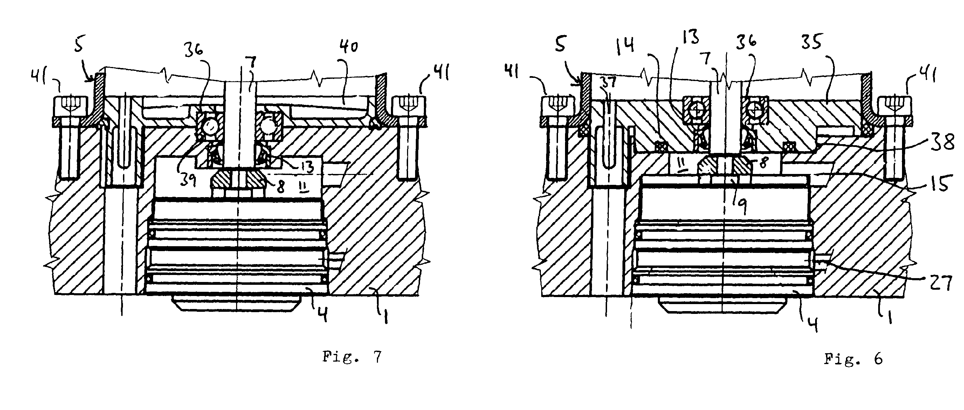

In Verbindung mit der schematischen Querschnittsansicht der Fig. 6 wird im folgenden ein anderes Beispiel beschrieben. Im Unterschied zu dem zuvor in Verbindung mit den Figuren 1 bis 5 beschriebenen ersten Beispiel weist der Motor 5 einen massiven Motorflansch 35 auf, welcher ein Lager 36 und eine Manschette oder Wellendichtring 13 zentriert. Gleichzeitig werden die durch die Motorwelle 7 eingeleiteten Motorkräfte im Motorflansch 35 aufgenommen. Zusammen mit dem Wellendichtring 13 gewährleistet der Dichtring 14 die Abdichtung des Saugraumes 11, in welchem die Kupplung 8 im Betrieb das Motormoment an die Pumpe 4, welche vorzugsweise als Innenzahnradpumpe ausgebildet ist, überträgt. Der Motorflansch 35 ist über eine parallel zur Pumpenachse ausgebildete Kontaktierung 37 mit dem Ventilblock 1 verbunden. Auf der dem Ventilblock 1 zugewandten Seite weist der Motorflansch 35 einen Zentrierbund 38 auf, welcher das Fluchten der Motorwelle 4 und der Pumpenwelle 9 gewährleistet.

Ein Ausführungsbeispiel der vorliegenden Erfindung ist in Fig. 7 dargestellt. Im Unterschied zu dem in Fig. 6 dargestellten Beispiel ist in dem Ausführungsbeispiel der vorliegenden Erfindung der Zentrierbund 38 (vergleiche Fig. 6) entfallen. Der Ventilblock 1 weist an der Stelle der Durchführung der Motorwelle 7 eine Lagerzentrierbohrung 39 auf, welche zum einen die Rotorkräfte des Motors 5 aufnimmt und zum anderen die Motorwelle 4 zentriert. Die Abdichtung des Saugraums 11 wird somit durch die im wesentlichen bis auf die Lagerzentrierbohrung 39 geschlossenen Ausbildung der dem Motor 5 zugewandten Seite des Ventilblocks 1 zusammen mit dem Wellendichtring 13 sichergestellt. Es ist im Gegensatz zu dem in Fig. 6 dargestellten Beispiel auch kein derart massiver Motorflansch 35 (vergleiche Fig. 6) erforderlich ein einfaches Lagerschild 40, welches aufgrund der geringen Belastungen auch vorzugsweise als Kunststoffspritzteil ausgebildet ist, reicht im Betrieb völlig aus. Das Gehäuse des Motors 5 ist über eine Schraubverbindung 41 an dem Ventilblock 1 befestigt. Die kürzere Baulänge der Innenzahnradpumpe 4 gegenüber dem in Fig. 6 gezeigten Beispiel wird dadurch gelöst, daß die beiden Pumpengehäusehälften 17, 18 durch Lancieren verbunden sind. Auf diese Weise wird eine spielfreie Verbindung erreicht, die neben dem Vorteil der Platzersparnis durch die kurze Bauweise, insbesondere verglichen mit Schraubverbindungen, überdies eine Verschmutzung des Systems durch Späne verhindert.

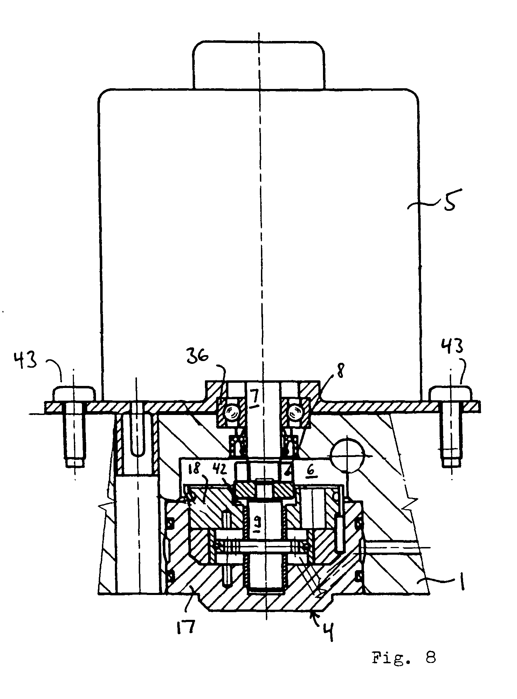

Eine bauteiloptimierte Verbindung von Motor 5 und Pumpe 6 mittels des Ventilblocks 1 ist in dem in Fig. 8 dargestellten Ausführungsbeispiel der vorliegenden Erfindung gezeigt. Man entnimmt der Darstellung der Fig. 8 insbesondere, daß an dem Pumpendeckel 18, d. h. der oberen Gehäusehälfte Innenzahnradpumpe 4, eine Stufenbohrung oder Absatz 42 ausgebildet ist, welche insbesondere die Funktion der Zentrierung der Kupplung 8 für die Montage des Elektromotors 5 übernimmt. Optional ist im Saugraum 6 ein (nicht dargestellter) Filter integriert. Eine partielle Preßpassung zwischen dem Pumpengehäuse 17 und dem Ventilblock 1 übernimmt die Drehmomentabstützung und verhindert ein Lösen der Pumpe 4 aus dem Ventilblock 1. Aufgrund der optimierten Verbindung kann die Schraubverbindung 41 (vergleiche Fig. 6 und 7) durch eine bei 43 angezeigte Nietverbindung ersetzt werden.

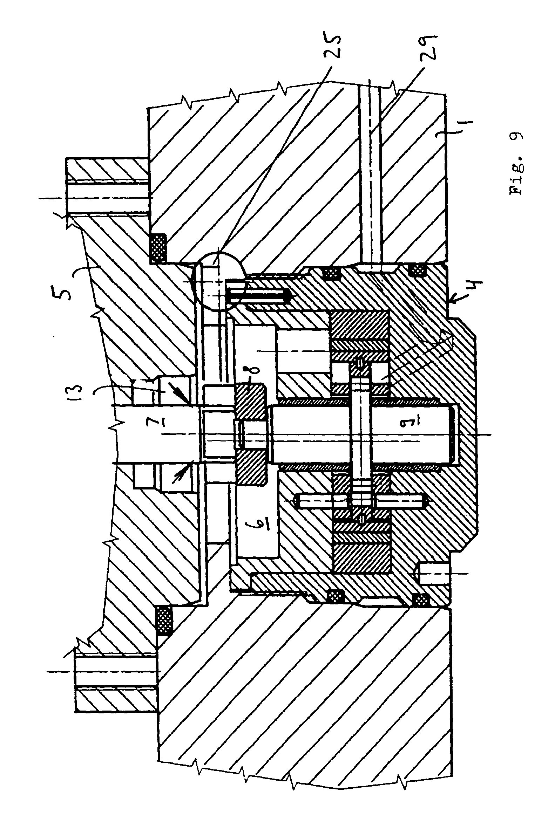

In Fig. 9 ist schematisch, lediglich zwecks Erläuterung ein Beispiel in einer Querschnittsansicht dargestellt. Auch in dem Beispiel der Fig. 9 strömt Druckmittel über die Saugbohrung 25 durch den Betrieb der Innenzahnradpumpe 4, welche gleichzeitig für eine Druckerhöhung sorgt durch die Druckbohrung 29 in einen (nicht dargestellten) Speicher. Für weitere Einzelheiten des in Fig. 9 dargestellten Beispiels wird insbesondere auf die Beschreibung und die Zeichnung gemäß Fig. 1 bis 5 des ersten Beispiels verwiesen. Es sei bemerkt, daß die Dichtmanschette 13 im bevorzugten EHB-Fall nur mit geringen Saugdrücken belastet wird.

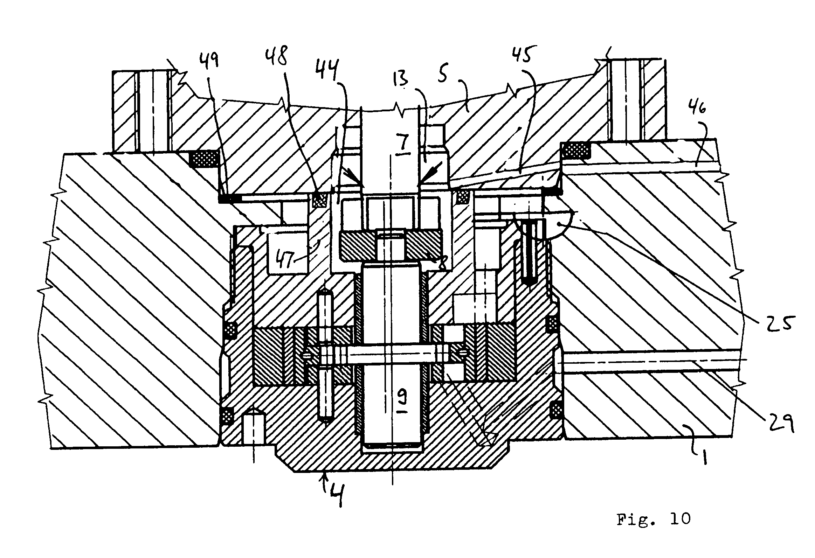

Im Unterschied dazu ist in Fig. 10 lediglich zwecks technischer Erläuterung ein weiteres Beispiel gezeigt. Der Aufbau der Pumpen in Fig. 9 und 10 ist im allgemeinen ähnlich, wobei aber die für die OHB-Anwendung bevorzugte Pumpe eine größere Auslegung besitzt. Im Unterschied zu dem Fall der EHB-Anwendüng können die Drücke, welche durch den Sauganschluß 25 eingeleitet werden wesentlich höher als in EHB-Fall sein, und beispielsweise ungefähr 200 bar betragen. Deshalb ist in dem Beispiel gemäß Fig. 10 gegenüber dem in Fig. 9 dargestellten Beispiel neben der Dichtmanschette 13 ein Niederdruckraum 44 im Pumpenansaugbereich vorgesehen. Der Niederdruckraum ist mit einem (nicht dargestellten) Niederdruckspeicher oder Behälter über die Kanäle 45 (im Motorgehäuse 5) und 46 (im Ventilblock 1) verbunden. Der Niederdruckraum 44 wird durch einen zylindrisch geformten Hülsenabschnitt 47 gebildet, welcher mit einem inneren Dichtring 48 und einem äußeren Dichtring 49 abgedichtet ist. Der innere Dichtring 48 ist dabei in einer entsprechenden Ausnehmung an der dem Motor 5 zugewandten Seite des Hülsenabschnitts 47 ausgebildet. Der äußere Dichtring 49 ist in einer Stufenbohrung zwischen Motor 5 und dem Ventilblock 1 angeordnet. Bei dem in Fig. 10 dargestellten Beispiel wird die Druckbelastung der Dichtmanschette 13, welche bei einer OHB-Anwendung besonders hoch minimiert. Ansonsten läßt sich das Problem einer unter Hochdruck stehenden, sich drehenden radialen Wellendichtung nur schwer lösen. Die Leckage aus der Pumpe kann somit abfließen.

### Bezugszeichenliste:

- 1: ventilblock oder HCU-Block
- 2: Ausnehmung
- 3: Ausnehmung
- 4: (Innenzahnrad-) Pumpe
- 5: (Elektro-) Motor
- 6: Ventilanordnung oder Ventilpatrone
- 7: Motorwelle
- 8: Kupplung
- 9: Ritzelwelle
- 10: Zapfen
- 11: Saugraum
- 12: Lagerschild
- 13: Manschette oder Wellendichtring
- 14: O-Ring-Dichtung oder Dichtring
- 15: Nachlaufanschluß
- 16: Rücklaufanschluß
- 17: Pumpengehäuse
- 18: Pumpendeckel
- 19: Hohlrand
- 20: Ritzel
- 21: Gleithülse
- 22: Radialscheibe
- 23: Gleitring
- 24: Saugfilter
- 25: Sauganschluß
- 26: Clinchkonturen
- 27: Druckanschluß
- 28: Druckfilter
- 29: Druckanschluß
- 30: Rückschlagventil
- 31: Druckbegrenzungsventil
- 32: Gehäuse
- 33: Clinchkontur
- 34: Ringkanal
- 35: Motorflansch
- 36: Lager
- 37: Kontaktierung
- 38: Zentrierbund
- 39: Lagerzentrierbohrung
- 40: Lagerschild
- 41: Schraubverbindung
- 42: Stufenbohrung
- 43: Nietenverbindung
- 44: Niederdruckraum
- 45: Kanal
- 46: Kanal
- 47: Hülsenabschnitt
- 48: Innerer Dichtring
- 49: Äußerer Dichtring

## Patentansprüche

1. Elektronisch regelbare Bremsanlage für Kraftfahrzeuge mit einer Druckerzeugungseinrichtung in einem Ventilblock (1) einer hydraulischen Regeleinheit, mit einer Antriebsvorrichtung aufweisend eine Motorwelle (7) für die Druckerzeugungseinrichtung, wobei die Druckerzeugungseinrichtung als im Ventilblock (1) angeordnete Innenzahnradpumpe (4) ausgebildet ist, und die Innenzahnradpumpe (4) als Patrone zwecks eigenständiger Handhabung und Vorprüfung ausgebildet ist, **dadurch gekennzeichnet, dass** die Motorwelle (7) der Antriebsvorrichtung in einem Lager (36) geführt ist, das in einer Lagerzentrierbohrung (39) in dem Ventilblock (1) aufgenommen ist.

2. Bremsanlage nach Anspruch 1, **dadurch gekennzeichnet, daß** die Innenzahnradpumpe (4) in einem Ventilblock (1) einer hydraulischen Regeleinheit durch wenigstens eine Clinch- oder Verstemmverbindung (26) befestigt ist.

3. Bremsanlage nach einem der Ansprüche 1 bis 2, **dadurch gekennzeichnet, daß** ein druckseitiger Anschluß der Druckerzeugungseinrichtung mit einer als Patrone ausgebildeten Ventilanordnung (6) verbunden ist, wobei die Ventilanordnung ein Rückschlagventil (30) und ein Druckbegrenzungsventil (31) aufweist.

4. Bremsanlage nach Anspruch 3, **dadurch gekennzeichnet, daß** die Ventilanordnung (6) in einem Ventilblock (1) einer hydraulischen Regeleinheit durch eine Clinch- oder Verstemmverbindung (33) befestigt ist.

5. Bremsanlage nach einem der Ansprüche 1 bis 4, **dadurch gekennzeichnet, daß** die Druckerzeugungseinrichtung einen Gehäuseteil (17) und einen Deckelteil (18) aufweist, wobei der Gehäuseteil (17) und der Deckelteil (18) mittels einer Lancierverbindung miteinander verbunden sind.

6. Bremsanlage nach einem der Ansprüche 1 bis 5, **dadurch gekennzeichnet, daß** im Pumpenansaugbereich der Druckerzeugungseinrichtung ein Niederdruckraum (44) ausgebildet ist.

7. Bremsanlage nach Anspruch 6, **dadurch gekennzeichnet, daß** der Niederdruckraum (44) mit einem Niederdruckspeicher oder dergleichen verbunden ist.

8. Bremsanlage nach Anspruch 6 oder 7, **dadurch gekennzeichnet, daß** zur Verbindung der Antriebseinrichtung und der Druckerzeugungseinrichtung eine Kupplungseinrichtung (8) vorgesehen ist, welche im Niederdruckraum (44) angeordnet ist.

## Claims

1. Electronically controllable brake unit for motor vehicles, having a pressure-generating device in a valve block (1) of a hydraulic control unit, with a drive device having a motor shaft (7) for the pressure-generating device, wherein the pressure-generating device is embodied as an internal gear pump (4) which is arranged in the valve block (1), and the internal gear pump (4) is embodied as a cartridge for the purpose of independent handling and pre-testing, **characterized in that** the motor shaft (7) of the drive device is guided in a bearing (36) which is held in a bearing-centering bore (39) in the valve block (1).

2. Brake unit according to Claim 1, **characterized in that** the internal gear pump (4) is mounted in a valve block (1) of a hydraulic control unit by means of at least one clinched or caulked connection (26).

3. Brake unit according to one of Claims 1 to 2, **characterized in that** a pressure-side port of the pressure-generating device is connected to a valve arrangement (6) which is embodied as a cartridge, wherein the valve arrangement has a non-return valve (30) and a pressure-limiting valve (31).

4. Brake unit according to Claim 3, **characterized in that** the valve arrangement (6) is mounted in a valve block (1) of a hydraulic control unit by means of a clinched or caulked connection (33).

5. Brake unit according to one of Claims 1 to 4, **characterized in that** the pressure-generating device has a housing component (17) and a lid component (18), wherein the housing component (17) and the lid component (18) are connected to one another by means of a lancer connection.

6. Brake unit according to one of Claims 1 to 5, **characterized in that** a low-pressure space (44) is formed in the pump intake region of the pressure-generating device.

7. Brake unit according to Claim 6, **characterized in that** the low-pressure space (44) is connected to a low-pressure accumulator or the like.

8. Brake unit according to Claim 6 or 7, **characterized in that** a coupling device (8), which is arranged in the low-pressure space (44), is provided for connecting the drive device and the pressure-generating device.

## Revendications

1. Installation de freinage à régulation électronique pour véhicules automobiles avec un dispositif de production de pression dans un bloc de soupapes (1) d'une unité de régulation hydraulique, avec un dispositif d'entraînement comprenant un arbre de moteur (7) pour le dispositif de production de pression, dans laquelle le dispositif de production de pression est réalisé sous la forme d'une pompe à engrenage intérieur (4) disposée dans le bloc de soupapes (1) et la pompe à engrenage intérieur (4) est réalisée sous la forme d'une cartouche en vue de sa manipulation et de son test préliminaire, **caractérisée en ce que** l'arbre de moteur (7) du dispositif d'entraînement est guidé dans un palier (36), qui est logé dans un alésage de centrage de palier (39) dans le bloc de soupapes (1).

2. Installation de freinage selon la revendication 1, **caractérisée en ce que** la pompe à engrenage intérieur (4) est fixée dans un bloc de soupapes (1) d'une unité de régulation hydraulique au moyen d'au moins un assemblage par encliquetage ou emboîtement (26).

3. Installation de freinage selon l'une quelconque des revendications 1 à 2, **caractérisée en ce qu'**un raccord côté pression du dispositif de production de pression est raccordé à un dispositif de soupapes (6) réalisé en forme de cartouche, dans laquelle le dispositif de soupapes (6) comprend un clapet anti-retour (30) et une soupape de limitation de pression (31).

4. Installation de pression selon la revendication 3, **caractérisée en ce que** le dispositif de soupapes (6) est fixé dans un bloc de soupapes (1) d'une unité de régulation hydraulique au moyen d'un assemblage par encliquetage ou emboîtement (33).

5. Installation de freinage selon l'une quelconque des revendications 1 à 4, **caractérisée en ce que** le dispositif de production de pression comprend une partie de boîtier (17) et une partie de couvercle (18), dans laquelle la partie de boîtier (17) et la partie de couvercle (18) sont assemblées l'une à l'autre au moyen d'un assemblage à lancer.

6. Installation de freinage selon l'une quelconque des revendications 1 à 5, **caractérisée en ce qu'**une chambre basse pression (44) est formée dans la région d'aspiration de la pompe du dispositif de production de pression.

7. Installation de freinage selon la revendication 6, **caractérisée en ce que** la chambre basse pression (44) est reliée à un accumulateur basse pression ou analogue.

8. Installation de freinage selon la revendication 6 ou 7, **caractérisée en ce qu'**il est prévu un dispositif de couplage (8), qui est disposé dans la chambre basse pression (44), pour relier le dispositif d'entraînement et le dispositif de production de pression.
